# EUROPEAN PATENT APPLICATION

(11) **EP 1 740 002 A1**
(43) Date of publication of application: **03.01.2007**
(21) Application number: 05710494.5
(22) Date of filing: 22.02.2005
(51) Int. Cl.: H04Q 7/38

(54) **BASE STATION DEVICE AND INITIALIZATION METHOD THEREOF**

(30) Priority: 24.03.2004 JP 2004086881
(71) Applicant: NEC CORPORATION, Minato-ku, Tokyo 108-8001 (JP)
(72) Inventor: HIGUCHI, Tatsuya, c/o NEC Corporation, Minato-ku Tokyo 108-8001 (JP)
(74) Representative: Glawe, Delfs, Moll
(86) International application number: PCT/JP2005/002763
(87) International publication number: WO 2005/091667

(57) **Abstract**

There is disclosed a base station device which can be easily initialized without fail. Base station call means performs a call operation upon a new installation. If there is an adjacent base station device with which interference may be caused, the adjacent base station device is connected by radio. When the base station call means is connected to the adjacent base station device, adjacent code search means acquires an identification code from the adjacent base station device. When the base station call means cannot be connected to the adjacent base station device, code decision means arbitrarily decides its own identification code. When the adjacent code search means has acquired an identification code from the adjacent base station device, the code decision means decides its own identification code so that it will not be duplicated to the acquired code. When base station call detection means receives a call from another base station device after its own identification code is decided, it responds to another base station device. Code report means reports its identification code to another base station device.

## Description

### Technical Field

The present invention relates to a base station device for a CDMA mobile communication system, and in particular, relates to initialization when the base station device is installed.

### Background Art

In general, a mobile communication system covers a wide area by arranging a plurality of cells of base stations and allows a mobile telephone to be used in the wide area. Also, the cells of adjacent base stations are partially overlapped, thereby performing uninterrupted communication.

However, when interference occurs between the adjacent base stations, the mobile telephone cannot perform communication properly. Therefore, base stations are arranged and installed properly by carriers so that interference does not occur between base stations. Also, there are proposed various methods of preventing the interference between base stations in the mobile communication system (For example, Japanese Patent Laid-Open No. 7-30954).

In recent years, since the mobile communication system is widely used in Japan, the number of mobile telephone subscribers is larger than that of fixed-line telephone subscribers. One reason may be that the number of people who only own mobile telephones and do not own fixed line telephone has increased. Such a person uses the mobile telephone not only away from home but also at home.

However, mobile telephones can only be used only in areas where base stations that have been installed by the carrier can receive and transmit radio signals. Therefore, there is a possibility that mobile telephones cannot be used at the back of a room in a building or that a good communication state cannot be maintained.

Conventionally, a base station for mobile telephones has been generally installed and managed by a carrier. If a user can purchase a small base station (hereinafter, called home BTS) and can install the home BTS in his/her home easily, like a codeless telephone, a mobile telephone can be used at any place in the home without any difficulty.

However, in this case, interference between base stations causes a problem. When home BTSs are widely used, the number of base stations including home BTSs is expected to far exceed the number of current base stations. As the number of base stations increases, the possibility of interference occurrence also increases. Therefore, it is important to install home BTSs so as not to cause interference.

In a CDMA mobile communication system, since each base station is identified by a spread code, under the present circumstances, the carrier manages the arrangement and the spread code of each base station manually manpower so that spread codes do not overlap between adjacent base stations.

### Disclosure of Invention

If each user can purchase and install a home BTS, the user must select an appropriate code in accordance with the circumstances around the installation location, so that interference does not occur between adjacent base station, similarly to the case of regular base station. When home BTSs are widely used, it is expected that the number of home BTSs will increase and the man-hour management for spread codes will increase.

Also, since the spread code to be set for the conventional home BTS is finally determined after the installation location is decided, the user desirably sets a code by himself/herself, taking into account the number of hours that is needed to install the BTS. However, since manual operation of the spread codes is complicated, there is a possibility that this activity by the user can become an obstacle to promoting wide use of home BTSs. Also, there is the possibility that a mistake which the user may make when setting the spread code for the BTS can not only affect the user's own communications, but can also affect the communication of an adjacent user, thereby causing a problem of system safety.

The present invention has as an object to provide a base station device that can be easily and unfailingly initialized.

To attain the above object, the base station device of the present invention is a base station device that connects with a mobile terminal by radio and enables communication by the mobile communication terminal in a mobile communication system, and is provided with base station call means, adjacent code search means, and code decision means.

Upon new installation of a base station device, a call operation is performed by the base station call means. If there is an adjacent base station with which interference may be caused, the adjacent base station device is connected by radio. When the base station call means is connected to the adjacent base station device, the adjacent code search means acquires an identification code that is unique to the adjacent base station device, from the adjacent base station device. When the base station call means cannot be connected to the adjacent base station device, the code decision means arbitrarily decides its identification code. When the adjacent code search means has acquired an identification code from the adjacent base station device, the code decision means decides its identification code so that it will not be duplicated to the acquired code.

Therefore, according to the present invention, since the base station device that is newly installed searches the identification code of the adjacent base station device by the adjacent code search means, and sets an identification code as its value so that it will not be duplicated to the code of the adjacent base station device by the code decision means, the person who is doing the installation must not pay attention to any overlap of the identification codes with the adjacent base station device, when a base station device is installed, and the person must not perform any complicated setting operation during installation.

### Brief Description of the Drawings

[FIG. 1] FIG. 1 is a block diagram showing a configuration of a mobile communication system of an embodiment according to the present invention.
[FIG. 2] FIG. 2 is a view showing an installation state of home BTSs.
[FIG. 3] FIG. 3 is a block diagram showing a configuration of the home BTS.
[FIG. 4] FIG. 4 is a flowchart showing an operation of the home BTS when newly installed.
[FIG. 5] FIG. 5 is a flowchart showing an operation of the home BTS when a call is made from MS.
[FIG. 6] FIG. 6 is a sequence diagram showing exchanges between a home BTS that is newly installed and an adjacent home BTS.

### Best Mode for Carrying Out the Invention

Detailed explanations are given of an embodiment of the present invention with reference to drawings. In this explanation, a W-CDMA -(Wideband Code Division Multiple Access) mobile communication system is taken as an example.

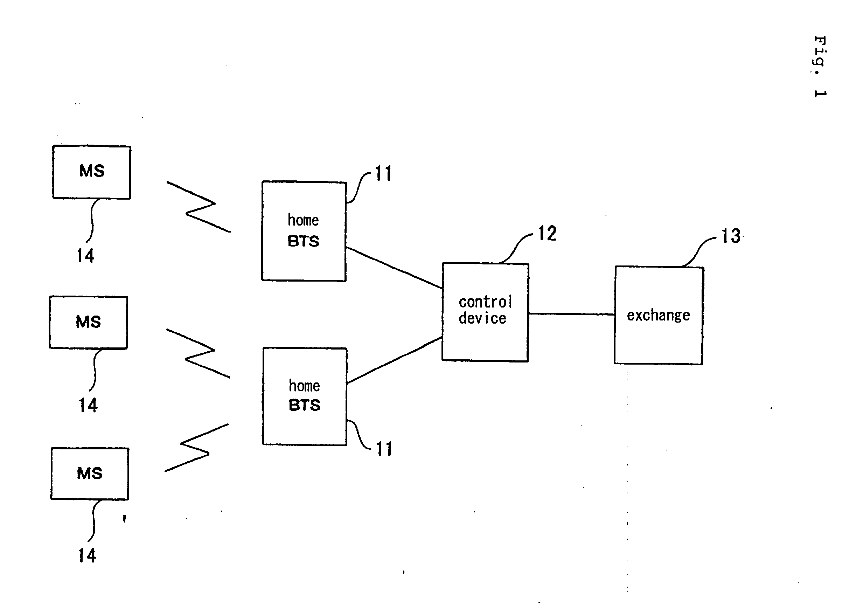

Figure 1 is a block diagram showing a configuration of a mobile communication system according to an embodiment of the present invention. Referring to FIG. 1, the mobile communication system according to the present embodiment includes home BTS 11, control device 12, and exchange 13.

Home BTS 11 is a small base station for which a user can select an installation location and which covers a small cell. Home BTS 11 is connected to mobile terminal (MS) 14 in the cell and has a function that enables voice communication and data communication between MS 14 and the other party. Home BTS 11 is installed so as to cover locations which cannot be reached by radio from the base station (not shown) that is installed by the carrier, for example, locations in the user's home, and enables MS 14 to be used in such a location.

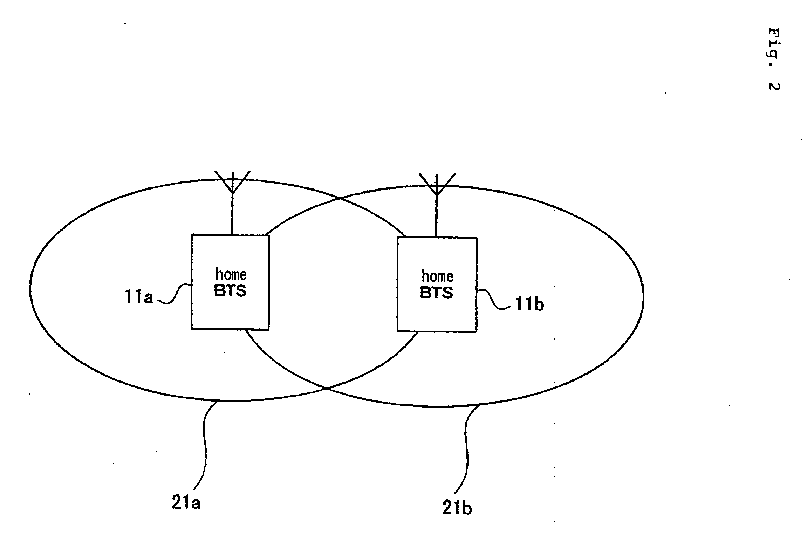

Figure 2 is a view showing the installation state of home BTSs. Referring to FIG. 2, cells 21 a, 21 b covered by two home BTSs 11 a, 11 b are mutually overlapped. Since a user installs home BTS 11 at an arbitrary location, there is a case in which cells 21 of home BTSs 11 that are adjacently installed will mutually overlap, as shown in FIG. 2.

In the W-CDMA mobile communication system, a double spread code including a scrambling code and a channelization code is used. The scrambling code is a code used to identify each base station or the cell.
The scrambling codes of adjacent cells must be selected so that they do not mutually overlap to cnsure that no interference occurs between the adjacent cells. On the other hand, the channelization code is a code used to identify each user. When the scrambling code and the channelization code are properly selected, each user can perform communication without experiencing interference.

Home BTS 11 has a function for automatically determining its scrambling code when newly installed. When the scrambling code is decided, home BTS 11 performs a call operation similar to the procedure of MS 14, on the assumption that there is an adjacent home BTS 11 of the cell because interference may be caused. Then, the home BTS, when receiving a response from an adjacent home BTS, acquires the scrambling code from the adjacent home BTS and sets a scrambling code that is not duplicated thereto, as its value. Also, existing home BTS 11, when receiving a call from home BTS 11 that is adjacently and newly installed, has a function of responding to the call and reporting its scrambling code.

- Home BTS 11 that has decided its scrambling code, when receiving a call from MS 14, reports the scrambling code and the channelization code allocated to MS 11. MS 14 uses these spread codes for communication.

Control device 12 is connected to home BTS 11 by wire or wireless and controls home BTS 11. Exchange 13 is connected to control device 12 and has an exchange function for arbitrarily setting a communication path for voice communication and data communication and for connecting a desired destination party. This exchange function includes line switching and packet switching functions.

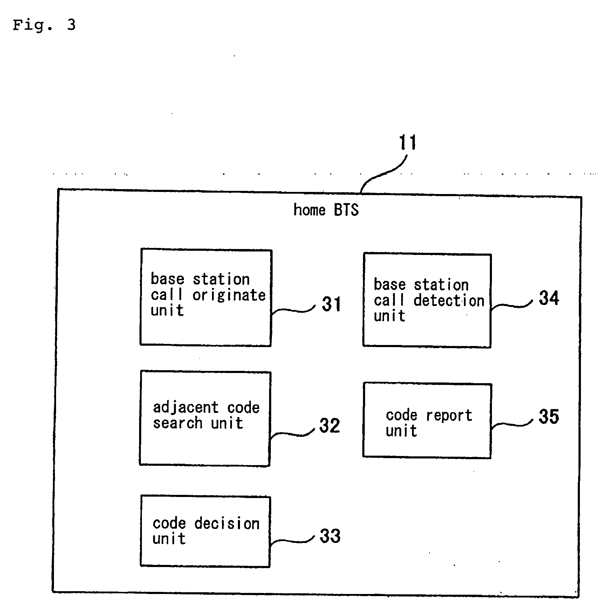

Figure 3 is a block diagram showing a configuration of home BTS. Referring to FIG. 3, home BTS 11 includes base station call originate unit 31, adjacent code search unit 32, code decision unit 33, base station call detection unit 34, and code report unit 35.

Base station call originate unit 31 performs a call operation when newly installed, and checks whether or not a link with adjacent home BTS 11 is established at a predetermined time. In this operation, the predetermined time is set to prevent a call request from repeating endlessly when there is no adjacent home BTS. Also, when there is no response from the adjacent home BTS, base station call originate unit 31 repeats a calling process predetermined number of times. This operation is performed to detect the adjacent home BTS without fail even when a connection cannot be temporally made with the adjacent home BTS in accordance with the communication condition.

When base station call originate unit 31 establishes the link with adjacent home BTS 11 at the predetermined time, adjacent code search unit 32 acquires a scrambling code (hereinafter, called adjacent scrambling code) from adjacent home BTS 11. At this time, adjacent code search unit 32 informs adjacent home BTS 11 with which the link is established, of a temporary scrambling code that is used when adjacent home BTS 11 transmits the-scrambling code. Then, adjacent code search unit 32, when receiving the spread signal from adjacent home BTS 11, acquires the adjacent scrambling code by despreading with the temporary scrambling code.

Code decision unit 33 decides its scrambling code in accordance with the process result of base station call originate unit 31 and adjacent code search unit 32. When the link with adjacent home BTS 11 is established in base station call originate unit 31 and the adjacent scrambling code is acquired in adjacent code search unit 32, code decision unit 33 decides the scrambling code that is not duplicated to it, as its value. When no link with home BTS 11 is established in base station call originate unit 31, code decision unit 33 obtains an arbitrary scrambling code in accordance with a predetermined rule and decides it as its value. For example, code decision unit 33 may be previously provided with a code table in which a plurality of scrambling codes are registered, and may select an arbitrary scrambling code from the code table.

Base station call detection unit 34, when receiving a call from another home BTS that is adjacently and newly installed, detects the call and responds to it.

Code report unit 35, when the call from another home BTS 11 is detected in base station call detection unit 35, reports its scrambling code to another home BTS 11. At this time, code report unit 35 spreads and transmits its scrambling code by using the temporary scrambling code reported from home BTS 11 that is newly installed.

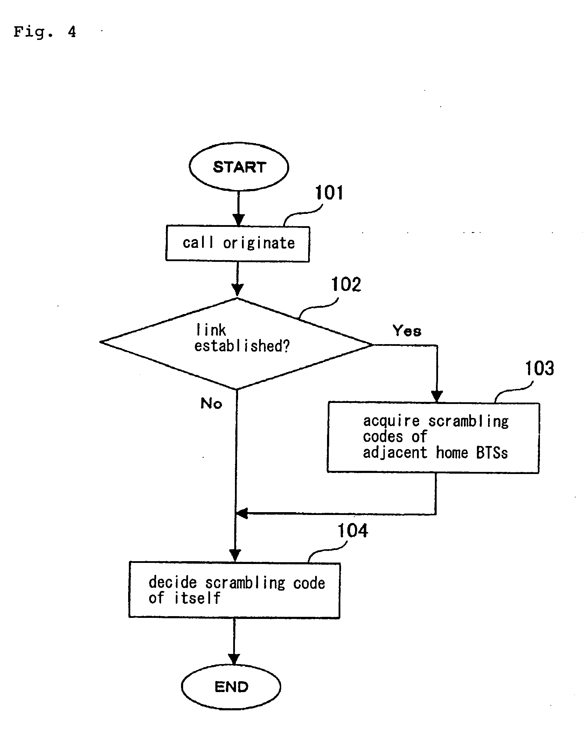

Figure 4 is a flowchart showing an operation of the home BTS when newly installed. Referring to FIG. 4, first, home BTS 11 performs a call operation when it is newly installed at step 101. At step 102, home BTS 11 determines whether or not the link is established with adjacent home BTS.

When the link is established with the adjacent home BTS at the predetermined time, home BTS 11 acquires the scrambling code of the adjacent home BTS at step 103.

When it is decided that no link is established at step 102 or after the process at step 103, home BTS 11 decides its scrambling code at step 104. Incidentally, when the adjacent scrambling code is acquired, the scrambling code of home BTS 11 is set to a value that is not duplicated in order to prevent interference between adjacent cells. Also, when no adjacent scrambling code is acquired, an arbitrary scrambling code is selected on the assumption that there is no adjacent cell that causes interference.

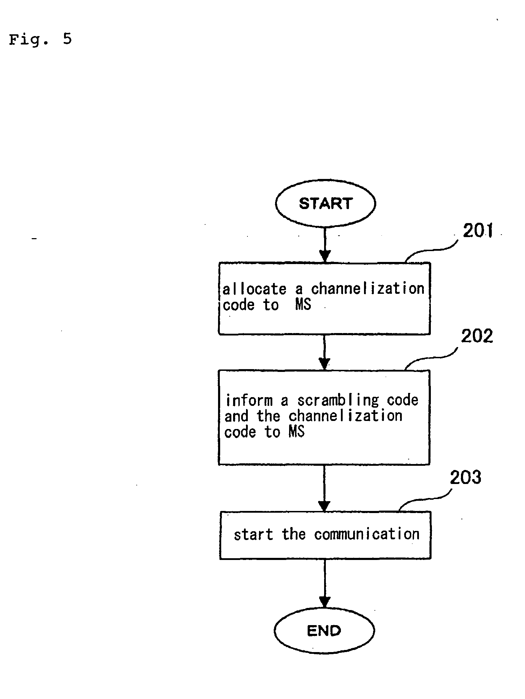

Figure 5 is a flowchart showing an operation of the home BTS when a call is made from the MS. Referring to FIG. 5, when a call is made from MS 14 after its scrambling code is decided, home BTS 11 allocates a channelization code to MS 14 at step 201. Then, home BTS 11 reports its own scrambling code and the channelization code allocated to MS 14 at step 202. Then, home BTS 11 starts communication with MS 14 by using the spread code at step 203.

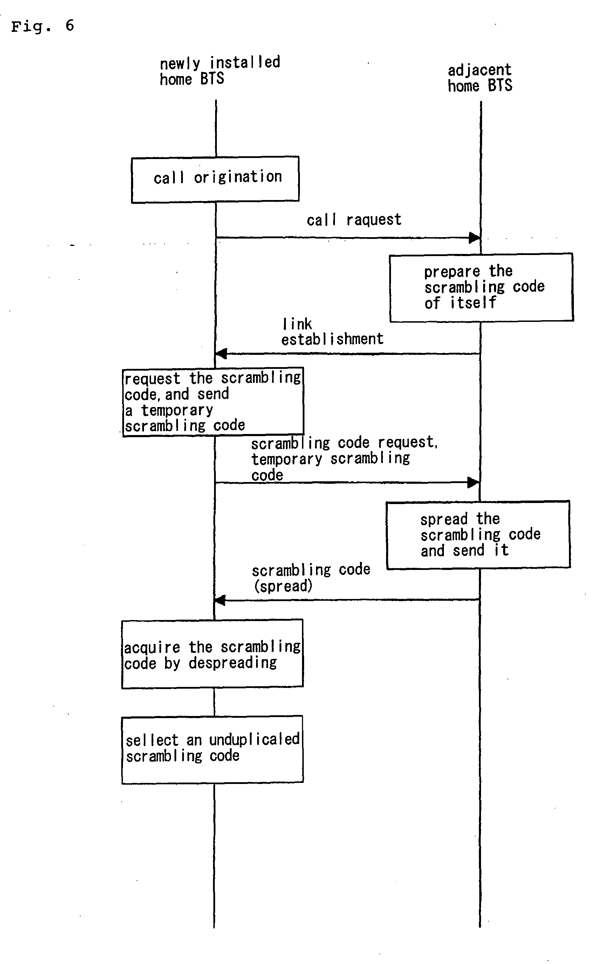

Figure 6 is a sequence diagram showing exchanges between the home BTS that is newly installed and the adjacent home BTS. Referring to FIG. 6, the home BTS that is newly installed requests a call to the adjacent home BTS by the call process. The adjacent home BTS prepares to transmit its scrambling code and transmits a response that the link has been established to a new home BTS.

The new home BTS, after requiring the scrambling code of the adjacent home BTS, transmits a temporary scrambling code to the adjacent home BTS. The adjacent home BTS that has received it, spreads its own scrambling code by using the temporary scrambling code and transmits it to the new home BTS. The new home BTS performs despreading of the signal from the adjacent home BTS, obtains the scrambling code of the adjacent home BTS, and selects its own scrambling code so that it will not be duplicated to the scrambling code and the temporary scrambling code.

Therefore, according to the present embodiment, home BTS 11 that is newly installed searches for the scrambling code of the adjacent home BTS by using adjacent code search unit 32 and decides the scrambling code that is duplicated to the adjacent home BTS as its value, thereby preventing interference with the adjacent home BTS. Therefore, the user can select the installation location without paying attention to interference when a home BTS is installed, and there is no need for complicated setting operations during installation, and there is no adverse effect by human-induced mistakes.

## Claims

1. A base station device that connects with a mobile terminal by radio and enables communication by said mobile terminal in a mobile communication system, comprising:
base station call means for performing a call operation when newly installed and, when there is an adjacent base station device with which interference may be caused, for connecting said adjacent base station device by radio;
adjacent code search means, when said base station call means is connected to said adjacent base station device, for acquiring an identification code that is unique to said adjacent base station device, from said adjacent base station device; and
code decision means for arbitrarily deciding its identification code when said base station cannot be connected with said adjacent base station and for deciding its identification code so that it will not be duplicated to said identification code when said adjacent code search means acquires said identification code from said adjacent base station device.

2. The base station device according to Claim 1, wherein said identification code is reported to said mobile terminal and is used for communication by said mobile terminal, when said mobile terminal performs communication through said base station device.

3. The base station device according to Claim 1, wherein said identification code is included in a double spread code used by said mobile terminal for frequency spreading.

4. The base station device according to anyone of Claims 1 to 3, further comprising:
base station call detection means, when receiving a call from another base station device after said identification code of the base station device is decided by said code decision means, for detecting said call and responding to said another base station device; and
code report means for reporting said identification code to said other base station device that originates the call detected by said base station call detection means.

5. The base station device according to Claim 4, wherein said adjacent code search means, when said identification code is acquired from said adjacent base station device, transmits a temporary spread code used for a frequency spreading process of said identification code to said adjacent base station device, and despreads a signal received from said adjacent base station device by using said temporary spread code to obtain said identification code of said adjacent base station device, and said code report means, when reporting said identification code to said another base station device, spreads said identification code by using the temporary spread code received from said other base station, and transmits said identification code to said base station device.

6. The base station device according to Claim 1, wherein a user can select an installation location freely and performs installation by himself/herself.

7. The base station device according to Claim 1, wherein said base station call means terminates said call operation when there is no response from an adjacent base station at a predetermined time during said call operation.

8. The base station device according to Claim 7, wherein said base station call means decides that there is no adjacent base station with which interference may be caused, when said base station call means cannot be connected with an adjacent base station though said call operation is repeated for a predetermined number of times.

9. An initialization method in a base station device that connects with a mobile terminal by radio and enables communication by said mobile terminal in a mobile communication system, comprising:
a first step of performing a call operation upon new installation of said base station device and of connecting with an adjacent base station device when there is an adjacent base station device with which interference may be caused;
a second step, when being connected with said adjacent base station device in said first step, of acquiring an identification code that is unique to said adjacent base station device from said adjacent base station device; and
a third step of arbitrarily deciding the identification code of the base station device when not connected to said adjacent base station device in the first step, and deciding the identification code of the mobile terminal so that it will not be duplicated to said identification code when said identification code is acquired from said adjacent base station device in said second step.

10. The initialization method according to Claim 9, wherein said identification code is a code that is reported to said mobile terminal and is used for communication by said mobile terminal when said mobile terminal performs communication through said base station device.

11. The initialization method according to Claim 10, wherein said identification code is included in a double spread code used for frequency spreading by said mobile terminal.

12. The initialization method according to anyone of Claims 9 to 11, further comprising:
a fourth step, when a call is received from another base station device after its own identification code is decided in said third step, of detecting said call and responding to said other base station device; and
a fifth step of reporting said identification code to said other base station device that is detected in said fourth step and reporting that said call is made.

13. The initialization method according-to Claim 12, wherein said second step complising, when said identification code is acquired from said adjacent base station device, transmitting a temporary spread code used for a frequency spreading process of said identification code to said adjacent base station device and despreading of a signal received from said adjacent base station device by using said temporary spread code to obtain said identification code of said adjacent base station device, and in said fifth step, when said its identification code is reported to said other base station device, said identification code is spread by using a temporary spread code received from said other base station device and is transmitted to said other base station device.

14. The initialization method according to Claim 9, wherein a user can select an installation location of said base station device freely and can install said base station device by himself/herself.

15. The initialization method according to Claim 9, wherein, in said call operation in said first step, said call operation is terminated when there is no response from an adjacent base station at a predetermined time.

16. The initialization method according to Claim 15, wherein, when the base station device cannot connect to an adjacent base station though said call operation is repeated for predetermined number of times, it is decided that there is no adjacent base station device to which interference may be caused.
